# FASCICULE DE BREVET EUROPEEN

(11) **EP 1 186 802 B1**
(45) Date de publication et mention de la délivrance du brevet: **21.01.2004**
(21) Numéro de dépôt: 01402319.6
(22) Date de dépôt: 07.09.2001
(51) Int. Cl.: F16H 47/04, B28C 5/42

(54) **Dispositif d'entraînement comprenant un moteur hydraulique et un réducteur**
Antriebsvorrichtung mit Hydraulikmotor und Zahnradgetriebe
Drive means comprising a hydraulic motor and reduction gearing

(30) Priorité: 07.09.2000 FR 0011380
(43) Date de publication de la demande: 13.03.2002
(73) Titulaire: POCLAIN HYDRAULICS INDUSTRIE, 60411 Verberie (FR)
(72) Inventeur: Grauby, André, 60200 Compiegne (FR); Martin, Louis, 60200 Compiegne (FR); Fontaine, Jacques, 60410 Verberie (FR); Vidal, Stéphane, 60126 Longueil-Sainte-Marie (FR); Rouillard, Jean-Marie, 60610 La Croix Saint-Ouen (FR)
(74) Mandataire: Intès, Didier Gérard André

(56) Documents cités:
- US-A- 5 820 506
- PATENT ABSTRACTS OF JAPAN vol. 1997, no. 10, 31 octobre 1997 (1997-10-31) -& JP 09 165783 A (HITACHI CONSTR MACH CO LTD), 24 juin 1997 (1997-06-24)

## Description

La présente invention concerne un dispositif d'entraînement selon le préambule de la revendication 1.

Par exemple, un dispositif d'entraînement de ce type peut être utilisé pour l'entraînement d'une cuve de bétonnière, la sortie du réducteur formant l'arbre d'entraînement de la cuve. Un tel dispositif peut également être utilisé pour entraîner des engins tels que des broyeurs, des treuils, des malaxeurs (par exemple pour l'industrie chimique ou alimentaire), ou encore des systèmes de translation. La sortie du réducteur est alors adaptée aux différentes utilisations.

On connaît, par EP 0 482 660 qui sert de base à la présentation en deux parties de la revendication 1, un dispositif de ce type dans lequel le carter du moteur et le carter du réducteur sont séparés par des moyens d'étanchéité. Dans la mesure où le degré de propreté du fluide requis pour le moteur hydraulique est plus grand que celui qui est requis pour le réducteur planétaire, cette séparation permet d'éviter qu'une éventuelle pollution du fluide contenu dans le carter du réducteur, due par exemple à l'usure des dents des engrenages contenus dans ce carter, n'atteigne le carter du moteur. En revanche, cette séparation rend nécessaires deux sources distinctes de fluide, raccordées aux deux carters par des circuits distincts, dans lesquels la pression de fluide doit être gérée par des moyens appropriés.

On connaît également, par exemple par WO 94/23 918, un dispositif d'entraînement dans lequel le carter du moteur et celui du réducteur planétaire ne forment qu'une seule et même enceinte. Cette disposition présente l'avantage de ne nécessiter qu'une seule source de fluide pour cette enceinte commune mais, en contrepartie, elle présente le risque qu'une pollution du fluide due par exemple à l'usure du réducteur ne contamine l'espace intérieur du carter du moteur.

La présente invention a pour but d'améliorer le dispositif connu du type précité.

Ce but est atteint avec le dispositif de l'invention grâce au fait qu'il comporte des moyens pour permettre une circulation de fluide entre lesdits carters et pour contrôler cette circulation de fluide en limitant la circulation de fluide au moins dans un sens de circulation entre le carter du moteur et le carter du réducteur.

Grâce à ces dispositions, une seule et même source de fluide est suffisante pour alimenter le carter du moteur et celui du réducteur.

De ce point de vue, l'invention présente les avantages des dispositifs dans lesquels le carter du moteur et celui du réducteur sont communs.

Cependant, les deux carters sont distincts et la circulation entre eux est contrôlée, ce qui permet par exemple de faire régner des pressions de fluide différentes dans les deux carters ou de faire en sorte que seul l'un des deux soit totalement rempli.

Ainsi, de ce point de vue, le dispositif de l'invention présente les avantages des dispositifs dans lesquels le carter du moteur et celui du réducteur sont isolés. En particulier, les moyens pour permettre une circulation de fluide contrôlée entre le carter du moteur et le carter du réducteur peuvent être choisis de manière à assurer que le carter du moteur soit rempli en permanence et que la pression du fluide dans ce carter ne dépasse pas une valeur prédéterminée. Le carter du réducteur peut jouer, pour le fluide contenu dans le carter du moteur, le rôle d'un vase d'expansion.

On notera en outre que les moyens de contrôle de la circulation de fluide peuvent permettre d'éviter, ou au moins de limiter les risques qu'une éventuelle pollution à l'intérieur du carter du réducteur ne se transmette au carter du moteur. Par exemple, les moyens de contrôle peuvent être réalisés de manière à empêcher les impuretés ayant une dimension supérieure à une dimension donnée et se trouvant dans le carter du réducteur, de pénétrer dans celui du moteur.

Selon un mode de réalisation, le dispositif comprend au moins un conduit de circulation de fluide entre le carter du moteur et le carter du réducteur, et ledit conduit est équipé desdits moyens pour limiter la circulation de fluide au moins dans un sens de circulation entre le carter du moteur et le carter du réducteur.

Ces moyens sont par exemple avantageusement constitués par une restriction et/ou par un clapet anti-retour.

Avantageusement, le dispositif comporte un orifice de remplissage ou de vidange commun au carter du moteur et au carter du réducteur, cet orifice communiquant avec un conduit de remplissage ou de vidange commun auxdits carters, et ce conduit de remplissage ou de vidange forme un conduit de circulation de fluide entre lesdits carters.

Cet orifice et ce conduit sont donc mis à profit à la fois pour remplir la fonction de remplissage ou de vidange des carters et pour permettre la circulation contrôlée de fluide entre-eux, ce qui limite le nombre d'usinages nécessaires à la réalisation de ces deux fonctions.

Avantageusement, l'orifice de remplissage ou de vidange est obturé par un bouchon qui coopère avec les moyens pour contrôler la circulation de fluide entre les carters du moteur et du réducteur.

Avantageusement, le carter du moteur et le carter du réducteur sont séparés par une paroi de séparation, et le conduit de circulation de fluide est ménagé dans cette paroi de séparation.

Cette disposition permet une réalisation particulièrement compacte et simple du dispositif d'entraînement. Elle est, de plus, peu coûteuse du point de vue de sa fabrication.

Selon une disposition avantageuse, le dispositif comprend un premier et un deuxième conduit de circulation de fluide entre le carter du moteur et le carter du réducteur, le premier conduit coopérant avec un premier système anti-retour qui autorise la circulation du fluide seulement dans le sens allant du carter du réducteur vers le carter du moteur, tandis que le deuxième conduit coopère avec un deuxième système anti-retour, qui autorise la circulation du fluide seulement dans le sens allant du carter du moteur vers le carter du réducteur, lorsque la différence de pression entre lesdits carter est au moins égale à une valeur donnée.

Un filtre peut être disposé sur le premier conduit pour éviter que les impuretés se trouvant dans le carter du réducteur ne pénètrent dans celui du moteur. Le premier système anti-retour peut être constitué par un clapet anti-retour classique. Le deuxième système anti-retour, qui coopère avec le deuxième conduit, permet de maintenir dans le carter du moteur une pression de fluide suffisante. Il s'agit par exemple d'un clapet anti-retour taré à une pression donnée.

Les premier et deuxième conduits de circulation de fluide sont avantageusement ménagés dans la paroi de séparation.

Dans certaines applications, le dispositif d'entraînement selon l'invention peut être alimenté en circuit ouvert. C'est par exemple le cas pour la motorisation d'un treuil de halage.

Toutefois, il peut être intéressant d'utiliser un circuit fermé, par exemple pour l'entraînement d'une cuve de bétonnière. Ainsi, le circuit d'alimentation en fluide du dispositif d'entraînement selon l'invention est par exemple un circuit fermé comportant une pompe principale qui comprend un carter, qui présente deux orifices principaux d'aspiration ou de refoulement et qui est destinée à alimenter un circuit principal comprenant des conduites principales d'alimentation et d'échappement du moteur hydraulique, le circuit comprenant, en outre, une pompe de gavage ayant un orifice principal d'aspiration relié à un réservoir de fluide.

Avantageusement, dans ce circuit, le réservoir de fluide est constitué par le carter du moteur hydraulique.

La pompe de gavage sert à maintenir dans le circuit une pression de fluide suffisante pour éviter les phénomènes de cavitation. Le circuit est simplifié par le fait que le réservoir de fluide dans lequel la pompe de gavage prélève le fluide de gavage est directement constitué par le carter du moteur hydraulique. Il n'est donc pas nécessaire de prévoir un réservoir sous la forme d'une enceinte séparée. Ainsi, le nombre de composants du circuit est limité et l'ensemble est très compact.

Ce circuit comporte, en outre, un bloc d'échange apte à prélever du fluide sur le circuit principal et des moyens pour ramener du fluide réfrigéré au réservoir constitué par le carter du moteur hydraulique.

Avantageusement, le bloc d'échange est intégré au carter de la pompe principale et est directement raccordé à ce carter, pour injecter dans ce dernier le fluide prélevé sur le circuit principal, sans conduite extérieure audit carter ; de plus, le carter de la pompe principale est raccordé au carter du moteur hydraulique par une conduite de retour de fluide vers ledit carter du moteur hydraulique, sur laquelle sont disposés des moyens de refroidissement.

Le bloc d'échange prélève du fluide sur le circuit principal et l'injecte dans le carter de la pompe principale. Le fluide est prélevé sur le circuit principal, en amont des orifices de raccordement de la pompe aux conduites principales du moteur. Ainsi, aucune conduite extérieure n'est nécessaire ni pour le prélèvement du fluide, ni pour son injection dans le carter de la pompe principale. Le circuit de prélèvement et d'injection est donc extrêmement court. Pour le refroidissement du moteur, le fluide est prélevé dans le carter de la pompe et est injecté dans le carter du moteur après avoir été refroidi. Ainsi, le circuit d'échange permet à la fois un balayage du carter du moteur et un balayage du carter de la pompe.

L'invention sera bien comprise et ses avantages apparaîtront mieux à la lecture détaillée qui suit, d'un mode de réalisation représenté à titre d'exemple non limitatif. La description se réfère aux dessins annexés, sur lesquels :
- la figure 1 montre un dispositif d'entraînement conforme à l'invention, le moteur hydraulique étant représenté partiellement en vue extérieure et partiellement en coupe axiale, tandis que le réducteur est représenté en coupe axiale ;
- la figure 2 est un schéma du circuit d'alimentation en fluide de ce dispositif ;
- les figures 3 et 4 sont des vues agrandies de variantes, dans la zone III de la figure 1 ; et
- les figures 5 à 7 sont des vues agrandies illustrant des variantes respectivement disposées dans les zones V, VI et VII de la figure 1.

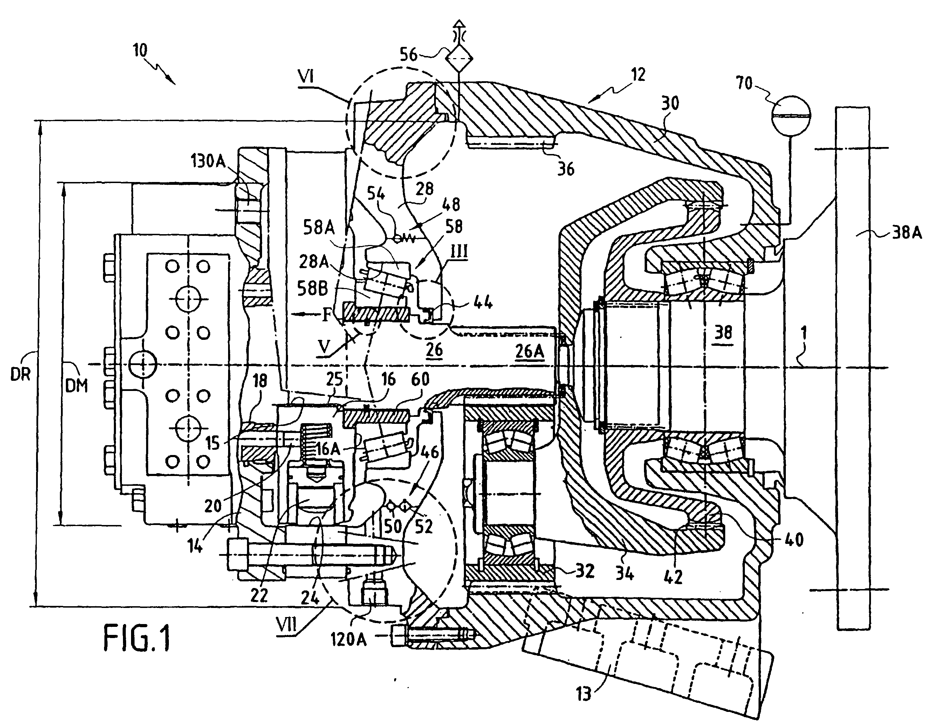

Le dispositif d'entraînement représenté sur la figure 1 comprend un moteur hydraulique 10 et un réducteur planétaire 12. Le moteur est du type à pistons radiaux. II s'agit d'un moteur lent et à fort couple.

Ce moteur est par exemple analogue à celui que divulgue EP 0 191 674, dont le contenu est intégré dans la présente description.

Le carter 14 du moteur est fixe et son bloc-cylindres 16 tourne par rapport à ce carter autour de l'axe de rotation 1. Un distributeur de fluide 18 permet de raccorder sélectivement les conduits de cylindres 20 à des conduites principales d'alimentation et d'échappement. Les pistons radiaux 22 du moteur coopèrent avec la came 24 qui est solidaire du carter 14.

L'arbre 26 est solidaire de la rotation du bloc-cylindres 16, par exemple par des cannelures axiales 15, 25. Cet arbre traverse une bride sensiblement radiale 28 pour s'étendre dans le carter du réducteur 30. La bride 28 constitue une paroi de séparation entre le carter du moteur 10 et le carter du réducteur 12.

L'extrémité 26A de l'arbre 26 qui se trouve dans le carter du réducteur présente une surface extérieure dentée et joue le rôle d'une roue solaire avec laquelle coopèrent les satellites 32 du réducteur. De manière connue en soi, ces satellites sont portés par un porte-satellites 34. Les roues dentées que constituent les satellites coopèrent avec une couronne dentée 36 ménagée sur la périphérie interne du carter 30, ce qui entraîne le porte-satellites en rotation à une vitesse réduite par rapport à celle de l'arbre 26.

L'arbre de sortie 38 du réducteur coopère avec le porte-satellites par une bride d'entraînement 40 qui porte une denture bombée et qui engrène sur une couronne dentée 42 formée sur la périphérie interne de la cloche constituée par la région du porte-satellites qui s'étend autour de la bride d'entraînement 40. L'arbre de sortie 38 sert par exemple à l'entraînement en rotation d'une cuve de bétonnière. Pour ce faire, cet arbre porte une bride de sortie 38A destinée à être fixée à la cuve. Bien entendu, en fonction de l'application envisagée, on peut choisir une sortie différente.

Le carter 14 du moteur et le carter 30 du réducteur forment des enceintes distinctes, séparées par la bride 28. En effet, l'alésage central de cette dernière coopère avec la périphérie externe de l'arbre 26 par l'intermédiaire d'un joint d'étanchéité 44. Cependant, le dispositif comprend des moyens pour permettre une circulation de fluide contrôlée entre les carters 14 et 30.

On a ainsi représenté sur la figure 1 deux conduits, 46 et 48, qui permettent une circulation de fluide entre les carters 14 et 30. Ces conduits sont ménagés dans la bride 28.

Le premier conduit 46 comporte un clapet anti-retour 50 qui autorise la circulation de fluide seulement dans le sens allant du carter 30 du réducteur vers le carter 14 du moteur. Il s'agit par exemple d'un clapet à bille disposé dans un perçage pratiqué dans la bride 28. Ce conduit comporte également un filtre 52 qui évite que les impuretés éventuellement présentes dans le carter du réducteur ne pénètrent dans celui du moteur. Ce filtre comporte avantageusement un noyau magnétique.

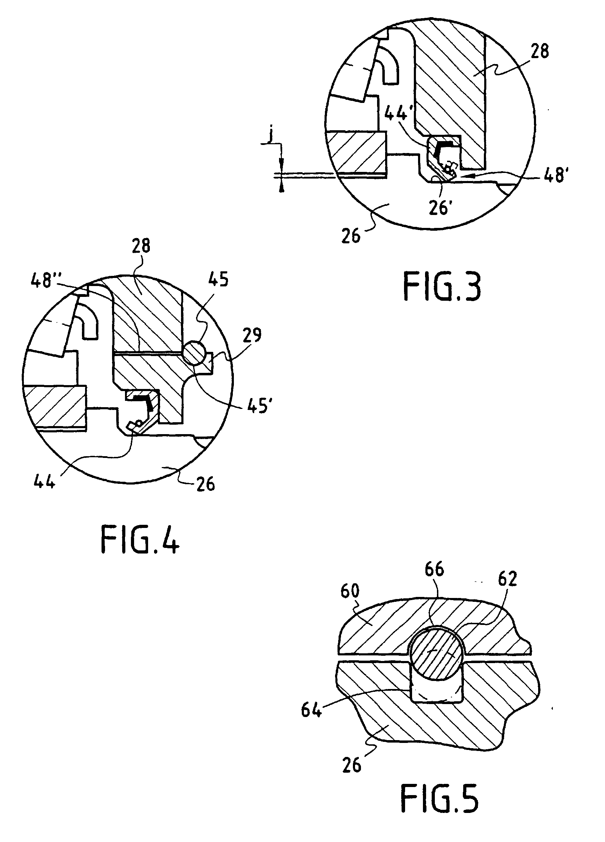

Le dispositif peut être fixée à un support tel que le châssis d'un véhicule par une base de fixation 13. La figure 1 montre le dispositif sensiblement dans sa position de fonctionnement (dans laquelle il est toutefois légèrement incliné par rapport à ce que montre la figure 3, puisque la base 13 est normalement horizontale), et l'on voit que le premier conduit 46 est disposé dans une partie inférieure de la paroi de séparation constituée par la bride 28. En effet, normalement, le carter 30 du réducteur n'est pas complètement rempli de fluide et l'on s'assure ainsi que le conduit 46 débouche dans une région de ce carter dans laquelle du fluide est présent en permanence.

Le deuxième conduit de circulation de fluide 48 comporte un clapet anti-retour 54 qui autorise seulement la circulation de fluide dans le sens allant du carter 14 du moteur vers le carter du réducteur 30. Il s'agit d'un clapet taré, par exemple à une pression de l'ordre de 1 bar, permettant ainsi de maintenir une pression suffisante à l'intérieur du carter 14 du moteur. Le conduit 48 est par exemple formé par un perçage pratiqué dans la bride 28, perçage dans lequel est disposé le clapet taré 54.

Le deuxième conduit 48 est disposé dans une partie supérieure de la paroi de séparation que constitue la bride 28. Il permet ainsi de réaliser une purge, au moins partielle, pour le carter du moteur, le conduit 48 placé dans la partie supérieure de ce carter pouvant évacuer vers le carter du réducteur 30 de l'air éventuellement contenu dans le carter du moteur. L'air en excès peut ensuite être évacué vers l'extérieur grâce à un dispositif de mise à l'air libre 56 que comporte le carter 30 du réducteur.

Sur la figure 1, le joint d'étanchéité 44 est un joint fixe qui assure l'étanchéité entre la pièce rotative que constitue l'arbre moteur 26 et la pièce fixe que constitue la paroi de séparation 28. La variante de la figure 3 montre un joint 44' qui est susceptible d'occuper deux positions. Dans ce cas, le deuxième conduit 48' est ménagé entre le joint 44' et l'arbre moteur 26 ou, plus précisément, sa périphérie externe 26'. Dans une première position représentée en trait plein, le joint 44' coopère de manière étanche avec l'arbre 26. Dans une deuxième position représentée en trait interrompu, il se décolle de la périphérie externe 26' de l'arbre 26 et autorise une circulation de fluide du carter 14 du moteur vers le carter 30 du réducteur. Le joint 44' est mobile entre l'une et l'autre de ces deux positions sous l'effet de la différence de pression entre le carter du moteur et celui du réducteur et il se décolle de la périphérie externe 26' de l'arbre moteur 26 à partir d'une différence de pression seuil. Il faut noter que le deuxième conduit de circulation de fluide pourrait être ménagé entre le joint 44' et la bride 28, le joint 44' pouvant être disposé de manière à être décollé de cette bride lorsque la différence de pression atteint une valeur seuil.

La figure 4 montre une autre variante, dans laquelle un joint 44 analogue à celui de la figure 1 réalise l'étanchéité entre la bride 28 et la périphérie externe de l'arbre 26. Le deuxième conduit de circulation de fluide est constitué par au moins un perçage 48" traversant de part en part la bride 28. Du côté du carter du réducteur, cette bride porte un joint 45, tel qu'un joint torique. Ce joint est maintenu en position dans une gorge 45' ménagée sur une portion 29 de la bride 28 en légère saillie axiale dans le carter du réducteur.

Le joint 45 est élastiquement mobile entre deux positions, sous l'effet de la différence de pression entre le carter du moteur et le carter du réducteur. Sur la figure 4, il est représenté dans sa première position, dans laquelle il obture l'orifice du conduit 48" du côté du réducteur, de sorte qu'il empêche la circulation de fluide entre le carter du moteur et le carter du réducteur. Lorsque la pression du carter du moteur augmente de telle sorte que la différence de pression entre ce carter et celui du réducteur atteint une valeur seuil, par exemple de l'ordre de 1 bar, le joint 45 est repoussé élastiquement de manière à légèrement se soulever dans la gorge 45', pour cesser d'obturer le conduit 48", ce qui permet une circulation de fluide dans le sens allant du carter du moteur vers celui du réducteur. Dans cette variante, le deuxième conduit de circulation de fluide peut être formé par une pluralité de conduits élémentaires constitués par des perçages 48" disposés sur un même diamètre de la bride 28 (avantageusement dans la partie de cette bride située au-dessus de l'axe 1).

Pour son support à rotation, le moteur 10 comporte un palier unique 58 constitué par un roulement conique. Ce palier coopère, d'une part, avec la paroi de séparation 28 et, d'autre part, avec une bague de centrage 60 qui est solidaire du bloc-cylindres 16 du moteur. Cette bague est en effet calée dans un décrochement annulaire de la face radiale 16A du bloc-cylindres qui est tournée vers la paroi de séparation 28. Autour de cette bague, la bride 28 présente une face axiale 28A. Le roulement conique est disposé entre cette face 28A et la périphérie externe de la bague de centrage 60. Plus précisément, la bague externe 58A du palier 58 repose contre la face 28A de la bride 28, tandis que la bague interne 58B de ce palier repose contre la périphérie externe de la bague de centrage 60. On pourrait d'ailleurs se servir de la bague interne de ce palier pour le centrage du bloc-cylindres en calant cette bague interne sur le bloc-cylindres et en supprimant la bague de centrage 60. La bague interne du palier pourrait par exemple avoir une forme correspondant à celle de l'ensemble constitué par la bague 58B et la bague 60, ensemble qui formerait alors ladite bague interne en une seule pièce réalisant à la fois le support interne du palier et le centrage du bloc-cylindres. On limiterait ainsi le nombre de pièces par rapport à ce que montre la figure 1. Sans l'arbre 26, le moteur forme une entité fonctionnelle et l'arbre sert à raccorder la sortie du moteur au. réducteur. Il constitue donc à la fois l'arbre de sortie du moteur et la roue solaire 26A du réducteur. Cet arbre 26 s'étend à travers la bague de centrage 60 et un jeu j (figure 3) par exemple de l'ordre de 0,2 mm est ménagé entre cet arbre et cette bague.

Bien entendu, le joint d'étanchéité 44 peut, en variante, être disposé entre la bride 28 et la bague de centrage 60. Dans ce cas, un joint d'étanchéité supplémentaire (tel qu'un joint torique) est disposé entre l'arbre 26 et la bague 60 (à cause du jeu j). Ainsi, dans ce cas, les moyens d'étanchéité qui établissent une liaison étanche entre la bride 28 et l'arbre 26 comprennent le joint 44 et ce joint supplémentaire.

De même, le joint 44' de la variante de la figure 3 peut être disposé entre la bride 28 et la bague de centrage 60, un joint supplémentaire pouvant alors être disposé entre cette bague et l'arbre 26 pour compléter la liaison étanche entre la bride et l'arbre. De manière générale, dans cette variante, le système anti-retour qui coopère avec le deuxième conduit 48' est constitué par le joint 44', ce dernier pouvant se décoller de l'un des éléments avec lesquels il coopère (selon les cas : arbre 26, bride 28 ou bague de centrage 60) pour autoriser une circulation de fluide du carter du moteur vers celui du réducteur.

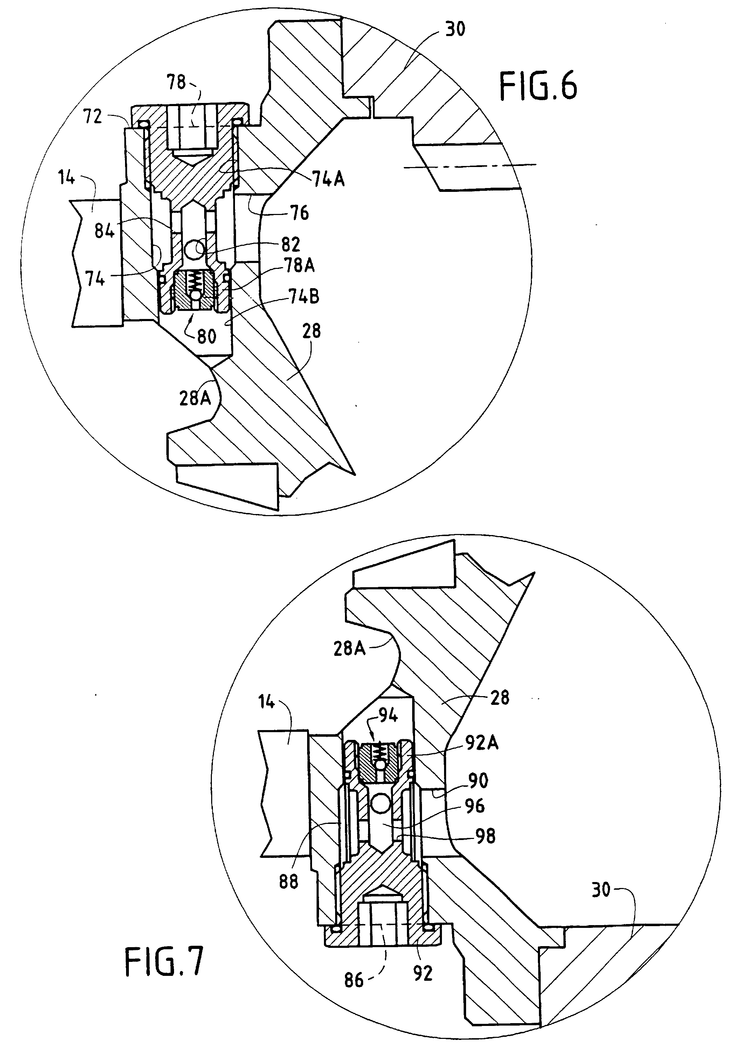

Sur le détail de la figure 5, on voit que l'arbre 26 est positionné axialement par rapport à la bague de centrage 60 au moyen d'un jonc de calage 62. La périphérie externe de l'arbre 26 présente à cet effet une première gorge annulaire 64 dont la profondeur est sensiblement égale au diamètre du jonc 62. De son côté, la périphérie interne de la bague de centrage 60 présente une deuxième gorge annulaire 66. Lorsque l'arbre 26 est correctement positionné axialement, les gorges 64 et 66 sont situées en regard l'une de l'autre. La bague de centrage étant calée axialement par rapport au bloc-cylindres, ce montage permet un calage axial de l'arbre par rapport au bloc-cylindres, par l'intermédiaire de la bague 60. On pourrait choisir d'éviter cet intermédiaire et de réaliser la gorge 66 dans l'alésage du bloc-cylindres et la gorge 64 dans une région de l'arbre située en regard.

Pour l'introduction de l'arbre 26 dans le bloc-cylindres par un déplacement axial dans le sens F, le jonc 62 est élastiquement rétracté à l'intérieur de la première gorge annulaire 64. Lorsque la gorge 64 vient en regard de la gorge 66, ce jonc peut se détendre élastiquement pour pénétrer dans la gorge 66 tout en empiétant sur la gorge 64. L'arbre est ainsi maintenu en position. Ce système constitue un moyen simple pour limiter le déplacement axial de l'arbre et donc pour éviter la détérioration du joint 44. De plus, il n'est pas nécessaire de prévoir une butée axiale dans la pièce du réducteur (partie centrale du porte-satellites 34 ou extrémité intérieure de l'arbre 38) qui fait face à l'extrémité 26A de l'arbre 26.

Dans la variante de la figure 6, le dispositif de l'invention comprend un orifice de remplissage 72 qui sert à la fois au remplissage du carter du moteur 14 et du carter du réducteur 30. Cet orifice est formé par l'extrémité d'un alésage 74 qui est situé dans la région de la bride 28 de manière à communiquer avec les deux carters. L'alésage 74 comprend un tronçon rectiligne sensiblement radial par rapport à l'axe de rotation 1, qui s'étend entre l'orifice 72 et l'espace intérieur de l'un des carters (en l'espèce le carter 14). Une branche de raccordement 76, qui est par exemple formée par un simple perçage sensiblement axial de la bride 28, relie l'espace intérieur de l'autre carter (en l'espèce le carter 30) à l'alésage 74.

De préférence, l'alésage 74 et la branche de raccordement 76 qui, considérés ensemble, forment un conduit de remplissage, sont formés dans la bride 28 qui présente une zone en creux 28A dans laquelle débouche l'extrémité de l'alésage 74 opposée à l'orifice 72.

Ce dernier est situé dans une région du dispositif qui se trouve vers le haut dans sa position de fonctionnement. Grâce à cet orifice, les carters 14 et 30 peuvent être remplis de fluide avant l'utilisation du dispositif. On dispose ensuite dans cet orifice 72 un bouchon d'obturation 78, par exemple fixé par vissage dans l'extrémité taraudée 74A de l'alésage 74.

Cet alésage et la branche de raccordement 76 forment, non seulement un conduit de remplissage, mais également un conduit de circulation entre les carters 14 et 30, dans lequel sont disposés des moyens permettant seulement la circulation dans un sens entre ces carters.

L'orifice 72 étant en partie haute du dispositif, ce sens est de préférence celui qui va du carter du moteur 14 vers celui du réducteur 30.

En l'espèce, les moyens permettant seulement la circulation dans un sens sont formés par un clapet anti-retour 80 solidaire du bouchon 78. En effet, ce dernier présente une extension 78A formant un corps creux qui établit, entre l'alésage 74 et la branche 76, une communication dans laquelle est fixé le clapet 80. Par exemple, le corps creux 78A présente un trou borgne 82 dont l'extrémité s'ouvre dans l'alésage 74 à l'opposé de l'orifice 72, ainsi que des perçages radiaux 84 faisant communiquer le trou borgne 82 avec la branche de raccordement 76. Le clapet anti-retour 80 est formé dans une pièce vissée à l'extrémité du trou borgne.

De manière alternative, on pourrait prévoir un clapet anti-retour, formé dans une pièce indépendante du bouchon et fixée, par exemple par vissage, dans la région 74B de l'alésage 74 opposée à l'orifice. Le bouchon serait alors formé par un simple bouchon classique. Toutefois, la possibilité représentée sur la figure 6 permet de manipuler le bouchon et le clapet comme une seule pièce.

L'utilisation d'un conduit de remplissage commun aux deux carters et sa mise à profit pour former un conduit de circulation contrôlée entre ces carters s'avère avantageuse car elle réduit le nombre de perçages nécessaires au remplissage des carters et à leurs mise en communication, par des usinages simples à réaliser, de préférence formés dans la bride 28 ; ce conduit constitue donc une alternative avantageuse pour les conduits 48, 48' et 48" décrits précédemment.

Lorsque, comme sur la figure 6, le sens de circulation autorisé par le clapet 80 est celui qui va du carter du moteur 14 vers celui du réducteur 30, alors le clapet 80 est taré (par exemple à 1 bar) pour maintenir une certaine pression dans le carter du moteur.

La variante de la figure 7 prévoit une disposition proche de celle de la figure 6, mais pour la vidange des carters. En effet, un orifice de vidange 86 commun aux carters 14 et 30 est formé au voisinage de la bride 28. Un alésage 88 et une branche de raccordement 90, respectivement analogues à l'alésage 74 et à la branche 76 sont formés en partie basse du dispositif pour faire communiquer l'orifice 86 avec les deux carters de manière à permettre leur vidange. L'alésage 88 et la branche de raccordement 90 sont avantageusement formés dans la bride 28, l'alésage 88 radial débouchant dans la zone en creux 28A de cette dernière.

Un bouchon 92 obture l'orifice 86. L'alésage 88 et la branche de raccordement 90 forment à la fois un conduit de vidange et un conduit de circulation dans lequel, en situation de fonctionnement du dispositif, est disposé un clapet anti-retour 94 qui permet seulement la circulation de fluide dans un sens entre les deux carters. Ce conduit de vidange et de circulation constitue une alternative avantageuse pour le conduit 46 décrit précédemment. L'orifice 86 étant en partie basse du dispositif, ce sens est de préférence celui qui va du carter du réducteur 30 vers le carter du moteur 14.

A l'instar du clapet 80, le clapet 94 peut être indépendant du bouchon 92 ou bien être fixé à l'extrémité du trou borgne 96 d'un corps creux 92A qui prolonge le bouchon 92, ce trou borgne communiquant avec la branche de raccordement 90 par des perçages radiaux 98 de ce corps. Ce clapet 94 est un clapet anti-retour simple, non taré avec, par exemple, un ressort maintenant seulement la bille sur son siège.

Ainsi, une disposition simple permet à la fois la vidange des carters 14 et 30, et la circulation de fluide contrôlée entre eux.

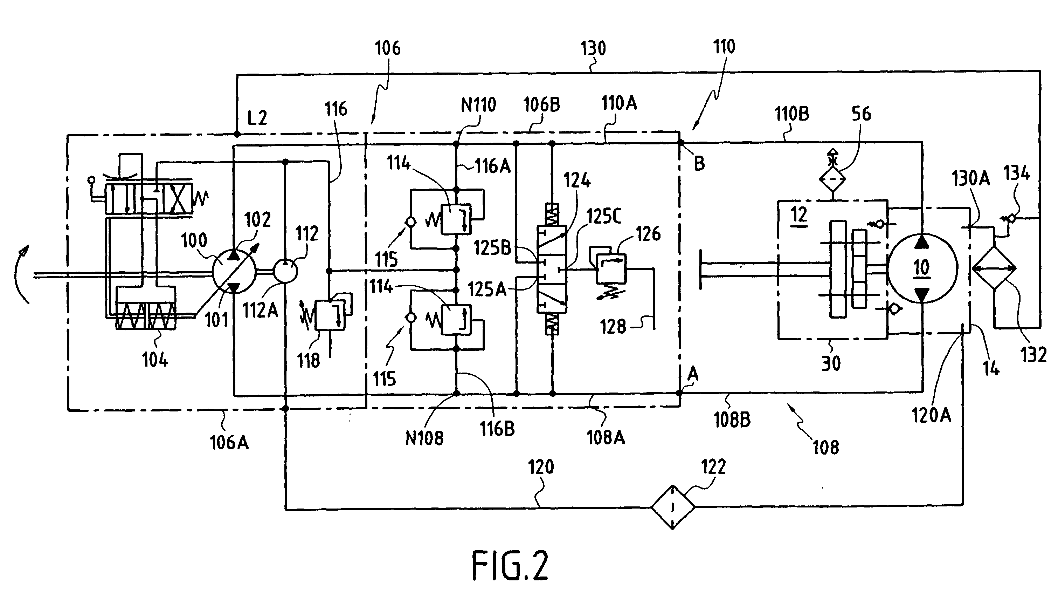

En référence à la figure 2, on décrit maintenant un circuit hydraulique d'alimentation en fluide du dispositif de la figure 1. Le moteur 10 disposé dans le carter 14 et le réducteur 12 disposé dans le carter 30 sont représentés symboliquement. Le circuit est un circuit fermé qui comprend une pompe principale 100 ayant deux orifices, 101 et 102, pour l'aspiration ou le refoulement de fluide. Le débit de cette pompe est réglable par un dispositif 104 connu en soi. La pompe fait partie d'un bloc disposé dans un carter 106. Ce carter présente deux orifices externes, respectivement A et B, qui sont respectivement reliés aux orifices 101 et 102 par des conduits internes 108A et 110A qui sont internes au carter 106. Les conduites principales du moteur, 108B et 110B, qui sont des conduites extemes au carter 106, sont respectivement raccordées à chacun de ces deux orifices. Selon le sens de fonctionnement du moteur, ces conduites 108B et 110B servent à l'alimentation ou à l'échappement du moteur 10. Dans la suite, on dénommera conduit principal 108 (respectivement 110) l'ensemble constitué par le conduit interne 108A (respectivement 110A) et pour la conduite principale 108B (respectivement 110B).

Le circuit comporte également une pompe de gavage 112 qui est disposée dans le carter 106. Cette pompe de gavage sert à éviter la cavitation dans les conduits principaux 108 et 110 auxquels elle est raccordée, respectivement en un noeud N110 et en un noeud N108, par des lignes de raccordement 116A et 116B sur lesquelles sont disposés des clapets anti-retour 115 associés à des limiteurs de pression 114. La pression dans la ligne de gavage 116 est maintenue par un limiteur de pression 118. On voit que le fluide en excès prélevé par le limiteur de pression 118 est directement rejeté dans le carter 106 ou, plus précisément, dans la partie de carter 106A dans laquelle sont disposées les pompes 100 et 112.

En situation normale de fonctionnement, le carter 14 du moteur 10 est rempli de fluide. Comme on le voit sur la figure 2, ce carter joue le rôle d'un réservoir dans lequel le fluide servant à alimenter la pompe de gavage 112 est prélevé par une conduite de prélèvement 120 reliée, d'une part, à l'orifice d'aspiration 112A de la pompe de gavage 112 et, d'autre part, à l'orifice 120A ménagé sur le carter du moteur. Un filtre 122 est disposé sur cette conduite 120. Ainsi, pour l'alimentation du circuit, il n'est pas nécessaire de prévoir d'autre réservoir de fluide que le carter du moteur lui-même, pour lequel le carter 30 du réducteur joue le rôle d'un vase d'expansion.

Cette disposition permet également de limiter la pression de fluide dans le carter du moteur et d'utiliser le carter du réducteur comme une réserve de fluide permettant de compléter en cas de besoin le fluide dans le carter du moteur.

On remarque d'ailleurs sur la figure 1 qu'un système de contrôle du niveau de fluide 70 est aménagé sur le carter de réducteur. Le carter 30 du réducteur dépasse radialement au-delà du carter 14 du moteur. Ainsi, les dimensions diamétrales maximales DR de l'espace interne du carter 30 sont supérieures aux dimensions diamétrales maximales DM de l'espace interne du carter 14. La prise de niveau de fluide du système de contrôle 70 se trouve à un endroit tel qu'il permet d'assurer que le minimum du niveau de fluide dans le carter 30 du réducteur est suffisant pour que le carter du moteur soit entièrement rempli. Ainsi, le système 70 définit un niveau de fluide minimum qui, en situation de fonctionnement du dispositif de l'invention, est égal ou supérieur à la limite supérieure de l'espace interne du carter 14.

Le circuit fermé représenté sur la figure 2 comporte également un bloc d'échange. Ce dernier comprend une valve d'échange 124 qui est raccordée aux conduits internes 108A et 110A. La valve 124 est commandée par la pression dans ces conduits de manière à prélever du fluide sur celui d'entre eux qui est à la plus basse pression. Le fluide ainsi prélevé est, par l'intermédiaire d'un limiteur de pression 126 qui maintient dans le circuit une pression suffisante, rejeté dans le carter 106 par une conduite de rejet 128.

Le carter 106 présente une partie de carter 106A, dans laquelle sont disposées les pompes 100 et 112, et une partie de carter 106B, dans laquelle sont disposés les clapets anti-retour 115 et les limiteurs de pression 114, la valve d'échange 124 et le limiteur de pression 126. Toutefois, ces deux parties sont directement fixées l'une sur l'autre et communiquent librement entre elles, de sorte qu'elles ne forment qu'une seule et même enceinte de fluide 106. Ainsi, le bloc d'échange comprenant la valve 124 et le limiteur de pression 126 est intégré au carter 106 de la pompe principale et permet d'injecter dans ce dernier le fluide prélevé sur le circuit principal sans aucune conduite extérieure au carter 106. Ce dernier est raccordé au carter 14 du moteur par une conduite 130 de retour de fluide vers ce carter 14. Sur cette conduite 130 sont disposés des moyens de refroidissement 132 pour ré-injecter dans le carter 14 du fluide refroidi. Par ce système, comprenant les conduites 128 et 130, on réalise un balayage continu du carter 106 de la pompe et du carter 14 du moteur. En cas de besoin (par exemple à basse température, lorsque la viscosité du fluide est élevée), le fluide peut être plus directement injecté dans le carter 14 en passant par un clapet taré 134. La conduite 130 est reliée en 130A au carter 14 du moteur, dans une région supérieure de ce dernier lorsqu'il est en position de fonctionnement, comme on le voit également sur la figure 1. En revanche, la prise de fluide 120A dans le carter du moteur à laquelle est raccordée la conduite 120 s'opère dans une région inférieure de ce carter.

La valve d'échange 124 présente une première et une deuxième voie, 125A et 125B, respectivement raccordées aux conduites principales 108 et 110, ainsi qu'une troisième voie 125C qui est raccordée au carter 106. Le limiteur de pression 126 est disposé entre cette troisième voie et ledit carter.

## Revendications

1. Dispositif d'entraînement comprenant un moteur hydraulique (10) et un réducteur planétaire (12), le moteur comportant un carter (14) à l'intérieur duquel est disposé un bloc-cylindres avec des pistons radiaux (22), le dispositif comprenant des moyens d'accouplement (25, 26) entre la sortie du moteur et l'entrée du réducteur, ce dernier comportant un carter (30) à l'intérieur duquel est disposé un système planétaire de réduction (32, 34, 36) et ayant une sortie (38) pourvue de moyens (38A) d'entraînement en rotation,
le carter (14) du moteur et le carter (30) du réducteur formant des enceintes distinctes, **caractérisé en ce que** le dispositif comporte des moyens (46, 50 ; 48, 54 ; 48', 44' ; 48", 45, 74, 76, 80 ; 88, 90, 94) pour permettre une circulation de fluide entre lesdits carters et pour contrôler cette circulation de fluide en limitant la circulation de fluide au moins dans un sens de circulation entre le carter du moteur et le carter du réducteur.

2. Dispositif selon la revendication 1, **caractérisé en ce qu'**il comprend au moins un conduit de circulation de fluide (46 ; 48 ; 48', 48" ; 74 , 76 ; 88, 90) entre le carter du moteur et le carter (30) du réducteur et **en ce que** ledit conduit est équipé desdits moyens (50 ; 54 ; 44' ; 45 ; 80 ; 94) pour limiter la circulation de fluide au moins dans un sens de circulation entre le carter du moteur et le carter du réducteur.

3. Dispositif selon la revendication 2, **caractérisé en ce que** le carter (14) du moteur et le carter (30) du réducteur sont séparés par une paroi de séparation (28) et **en ce que** le conduit de circulation de fluide (46 ; 48 ; 48', 48" ; 74, 76 ; 88, 90) est ménagé dans cette paroi de séparation.

4. Dispositif selon l'une quelconque des revendications 1 à 3, **caractérisé en ce qu'**il comprend un premier et un deuxième conduit de circulation de fluide (46, 48 ; 46, 48', 48" ; 88, 90, 74, 76) entre le carter (14) du moteur et le carter (30) du réducteur, le premier conduit (46 ; 88, 90) coopérant avec un premier système anti-retour (50 ; 94) qui autorise la circulation du fluide seulement dans le sens allant du carter du réducteur vers le carter du moteur, tandis que le deuxième conduit (48 ; 48', 48" ; 74, 76) coopère avec un deuxième système anti-retour (54, 44' ; 45 ; 80), qui autorise la circulation du fluide seulement dans le sens allant du carter (14) du moteur vers le carter (30) du réducteur, lorsque la différence de pression entre lesdits carter est au moins égale à une valeur donnée.

5. Dispositif selon les revendications 3 et 4, **caractérisé en ce que** les premier et deuxième conduits de circulation de fluide (46 ; 48 ; 48', 48" ; 88, 90, 74, 76) sont ménagés dans la paroi de séparation (28).

6. Dispositif selon la revendication 5, **caractérisé en ce que**, en situation de fonctionnement du dispositif, le premier conduit de circulation de fluide (46 ; 88, 90) est disposé dans une partie inférieure de la paroi de séparation (28).

7. Dispositif selon l'une quelconque des revendications 5 et 6, **caractérisé en ce que**, en situation de fonctionnement du dispositif, le deuxième conduit de circulation de fluide (48 ; 48', 48" ; 74, 76) est disposé dans une partie supérieure de la paroi de séparation (28).

8. Dispositif selon l'une quelconque des revendications 4 à 7, **caractérisé en ce que** le premier conduit de circulation de fluide (46) comporte un filtre (52).

9. Dispositif selon l'une quelconque des revendications 2 à 8, **caractérisé en ce qu'**il comporte un orifice de remplissage (72) commun au carter du moteur (14) et au carter du réducteur (30), qui communique avec un conduit de remplissage (74, 76) commun auxdits carters, et **en ce que** ledit conduit de remplissage forme un conduit de circulation de fluide entre lesdits carters.

10. Dispositif selon la revendication 9, **caractérisé en ce que** l'orifice de remplissage (72) est obturé par un bouchon (78) qui coopère avec les moyens (80) pour contrôler la circulation de fluide entre le carter du moteur et le carter du réducteur.

11. Dispositif selon l'une quelconque des revendications 2 à 10, **caractérisé en ce qu'**il comporte un orifice de vidange (86) commun au carter du moteur (14) et au carter du réducteur (30), qui communique avec un conduit de vidange (88, 90) commun auxdits carters, et **en ce que** ledit conduit de vidange forme un conduit de circulation de fluide entre lesdits carters.

12. Dispositif selon la revendication 11, **caractérisé en ce que** l'orifice de vidange (86) est obturé par un bouchon (92) qui coopère avec les moyens (94) pour contrôler la circulation de fluide entre le carter du réducteur et le carter du moteur.

13. Dispositif selon la revendication 3 et l'une quelconque des revendications 1 à 12, **caractérisé en ce que** les moyens d'accouplement entre la sortie du moteur (10) et l'entrée du réducteur (12) comprennent un arbre moteur (26) qui s'étend à travers la paroi de séparation (28), une liaison étanche étant établie entre ladite paroi et ledit arbre, et **en ce que** le moteur comporte un palier unique de support à rotation (58) constitué par un roulement conique qui coopère, d'une part, avec la paroi de séparation (28) et, d'autre part, avec une bague de centrage (60) qui est solidaire du bloc-cylindres (16) du moteur (10), l'arbre moteur (26) s'étendant à travers cette bague de centrage (60) et un jeu (j) étant ménagé entre ledit arbre et ladite bague.

14. Dispositif selon la revendication 13, **caractérisé en ce que** l'arbre moteur (26) est positionné axialement par rapport au bloc-cylindres (16) au moyen d'un jonc de calage (62).

15. Dispositif selon la revendication 4 et l'une quelconque des revendications 1 à 14, **caractérisé en ce que** les moyens d'accouplement entre la sortie du moteur et l'entrée du réducteur comprennent un arbre moteur (26) qui s'étend à travers la paroi de séparation (28), des moyens d'étanchéité comprenant un joint d'étanchéité (44') étant disposés entre ladite paroi et ledit arbre et **en ce que** le deuxième conduit de circulation de fluide (48') est ménagé entre le joint d'étanchéité (44') et l'un des éléments (26, 28) avec lesquels ledit joint coopère, ce joint étant susceptible, sous l'effet de la différence de pression entre le carter (14) du moteur et le carter (30) du réducteur, d'occuper une première position dans laquelle il obture ledit deuxième conduit et une deuxième position dans laquelle il autorise une circulation de fluide du carter (14) du moteur vers le carter (30) du réducteur.

16. Dispositif selon l'une quelconque des revendications 1 à 15, **caractérisé en ce qu'**il comporte un système (70) de contrôle du niveau de fluide dans le carter du réducteur.

17. Dispositif selon la revendication 16, **caractérisé en ce que** le système de contrôle du niveau (70) définit un niveau minimum qui, en situation de fonctionnement du dispositif, est supérieur à la limite supérieure de l'espace interne du carter (14) du moteur.

18. Dispositif d'entraînement selon l'une quelconque des revendications 1 à 17, comprenant un circuit d'alimentation, ce circuit étant un circuit fermé comportant une pompe principale (100) qui comprend un carter (106), qui présente deux orifices principaux (101, 102) d'aspiration ou de refoulement et qui est destinée à alimenter un circuit principal comprenant des conduites principales d'alimentation et d'échappement (108, 110) du moteur hydraulique (10), le circuit comprenant, en outre, une pompe de gavage (112) ayant un orifice principal d'aspiration (112A) relié à un réservoir de fluide,
**caractérisé en ce que** le réservoir de fluide est constitué par le carter (14) du moteur hydraulique.

19. Dispositif selon la revendication 18, comportant, en outre, un bloc d'échange (124, 126, 128) apte à prélever du fluide sur le circuit principal (108, 110) et des moyens (130, 132) pour ramener du fluide réfrigéré au réservoir constitué par le carter (14) du moteur hydraulique,
**caractérisé en ce que** le bloc d'échange (124, 126, 128) est intégré au carter (106) de la pompe principale (100) et est directement raccordé à ce carter, pour injecter dans ce dernier le fluide prélevé sur le circuit principal, sans conduite extérieure audit carter.

20. Dispositif selon la revendication 18 ou 19, **caractérisé en ce que** le carter (106) de la pompe principale (100) est relié au carter (14) du moteur (10) par une conduite de retour de fluide (130) vers le réservoir constitué par ledit carter (14) du moteur, sur laquelle sont disposés des moyens de refroidissement (132).

21. Dispositif selon la revendication 19 ou 20, **caractérisé en ce que** la valve d'échange (124) présente une première et une deuxième voie (125A, 125B), respectivement raccordées aux conduites principales d'alimentation et de refoulement (108, 110), ainsi qu'une troisième voie (125C) raccordée au carter (106) de la pompe principale (100) et **en ce qu'**un limiteur de pression (126) est disposé entre ladite troisième voie et ledit carter.

## Patentansprüche

1. Antriebsvorrichtung, umfassend einen Hydraulikmotor (10) und ein Planetenuntersetzungsgetriebe (12), wobei der Motor ein Gehäuse (14) umfaßt, in dem ein Zylinderblock mit Radialkolben (22) angeordnet ist, wobei die Vorrichtung Kupplungsmittel (25, 26) zwischen dem Ausgang des Motors und dem Eingang des Untersetzungsgetriebes umfaßt, wobei letztgenanntes ein Gehäuse (30) umfaßt, in dem ein Planetenuntersetzungssystem (32, 34, 36) angeordnet ist, und einen Ausgang (38) umfaßt, der mit Drehantriebsmitteln (38A) versehen ist, wobei das Gehäuse (14) des Motors und das Gehäuse (30) des Untersetzungsgetriebes unterschiedliche Innenräume bilden, **dadurch gekennzeichnet, daß** die Vorrichtung Mittel (46, 50; 48, 54; 48', 44'; 48", 45; 74, 76, 80; 88, 90, 94)umfaßt, um eine Fluidzirkulation zwischen den Gehäusen zu ermöglichen und um diese Fluidzirkulation zu kontrollieren, indem die Fluidzirkulation zumindest in eine Zirkulationsrichtung zwischen dem Gehäuse des Motors und dem Gehäuse des Untersetzungsgetriebes begrenzt wird.

2. Vorrichtung nach Anspruch 1, **dadurch gekennzeichnet, daß** sie mindestens eine Fluidzirkulationsleitung (46; 48; 48', 48"; 74, 76; 88, 90) zwischen dem Gehäuse des Motors und dem Gehäuse (30) des Untersetzungsgetriebes umfaßt, und daß die Leitung mit den Mitteln (50; 54; 44'; 45; 80; 94) ausgestattet ist, um die Fluidzirkulation zumindest in eine Zirkulationsrichtung zwischen dem Gehäuse des Motors und dem Gehäuse des Untersetzungsgetriebes begrenzen.

3. Vorrichtung nach Anspruch 2, **dadurch gekennzeichnet, daß** das Gehäuse (14) des Motors und das Gehäuse (30) des Untersetzungsgetriebes durch eine Trennwand (28) getrennt sind, und daß die Fluidzirkulationsleitung (46; 48; 48', 48" ; 74, 76; 88, 90) in dieser Trennwand vorgesehen ist.

4. Vorrichtung nach einem der Ansprüche 1 bis 3, **dadurch gekennzeichnet, daß** sie eine erste und eine zweite Fluidzirkulationsleitung (46, 48; 46, 48', 48' '; 88, 90, 74, 76) zwischen dem Gehäuse (14) des Motors und dem Gehäuse (30) des Untersetzungsgetriebes umfaßt, wobei die erste Leitung (46; 88, 90) mit einem ersten Rückschlagsystem (50; 94) zusammenwirkt, das die Fluidzirkulation nur in die Richtung vom Gehäuse des Untersetzungsgetriebes zum Gehäuse des Motors gestattet, während die zweite Leitung (48; 48'; 48"; 74, 76) mit einem zweiten Rückschlagsystern (54, 44'; 45; 80) zusammenwirkt, das die Fluidzirkulation nur in die Richtung vom Gehäuse (14) des Motors zum Gehäuse (30) des Untersetzungsgetriebes gestattet, wenn der Druckunterschied zwischen den Gehäusen mindestens gleich einem gegebenen Wert ist.

5. Vorrichtung nach den Ansprüchen 3 und 4, **dadurch gekennzeichnet, daß** die erste und die zweite Fluidzirkulationsleitung (46; 48; 48', 48" ; 88, 90, 74, 76) in der Trennwand (28) vorgesehen sind.

6. Vorrichtung nach Anspruch 5, **dadurch gekennzeichnet, daß** in der Betriebssituation der Vorrichtung die erste Fluidzirkulationsleitung (46; 88, 90) in einem unteren Teil der Trennwand (28) angeordnet ist.

7. Vorrichtung nach einem der Ansprüche 5 und 6, **dadurch gekennzeichnet, daß** in der Betriebssituation der Vorrichtung die zweite Fluidzirkulationsleitung (48; 48', 48' ' ;74, 76) in einem oberen Teil der Trennwand (28) angeordnet ist.

8. Vorrichtung nach einem der Ansprüche 4 bis 7, **dadurch gekennzeichnet, daß** die erste Fluidzirkulationsleitung (46) einen Filter (52) umfaßt.

9. Vorrichtung nach einem der Ansprüche 2 bis 8, **dadurch gekennzeichnet, daß** sie eine Befüllungsöffnung (72) umfaßt, die dem Gehäuse des Motors (14) und dem Gehäuse des Untersetzungsgetriebes (30) gemein ist und die mit einer Befüllungsleitung (74, 76), die den Gehäusen gemein ist, in Verbindung steht, und daß die Befüllungsleitung eine Fluidzirkulationsleitung zwischen den Gehäusen bildet.

10. Vorrichtung nach Anspruch 9, **dadurch gekennzeichnet, daß** die Befüllungsöffnung (72) durch einen Stopfen (78) verschlossen ist, der mit den Mitteln (80) zusammenwirkt, um die Fluidzirkulation zwischen dem Gehäuse des Motors und dem Gehäuse des Untersetzungsgetriebes zu kontrollieren.

11. Vorrichtung nach einem der Ansprüche 2 bis 10, **dadurch gekennzeichnet, daß** sie eine Entleerungsöffnung (86) umfaßt, die dem Gehäuse des Motors (14) und dem Gehäuse des Untersetzungsgetriebes (30) gemein ist und die mit einer Entleerungsleitung (88, 90) in Verbindung steht, die den Gehäusen gemein ist, und daß die Entleerungsleitung eine Fluidzirkulationsleitung zwischen den Gehäusen bildet.

12. Vorrichtung nach Anspruch 11, **dadurch gekennzeichnet, daß** die Entleerungsöffnung (86) durch einen Stöpsel (92) verschlossen ist, der mit den Mitteln (94) zur Kontrolle der Fluidzirkulation zwischen dem Gehäuse des Untersetzungsgetriebes und dem Gehäuse des Motors zusammenwirkt.

13. Vorrichtung nach Anspruch 3 und einem der Ansprüche 1 bis 12, **dadurch gekennzeichnet, daß** die Kupplungsmittel zwischen dem Ausgang des Motors (10) und dem Eingang des Untersetzungsgetriebes (12) eine Antriebswelle (26) umfassen, die sich durch die Trennwand (28) hindurch erstreckt, wobei eine dichte Verbindung zwischen der Wand und der Welle hergestellt wird, und daß der Motor ein einziges Drehstützlager (58) umfaßt, das von einem konischen Rollenlager gebildet ist und einerseits mit der Trennwand (28) und andererseits mit einem Zentrierring (60) zusammenwirkt, der mit dem Zylinderblock (16) des Motors (10) verbunden ist, wobei sich die Antriebswelle (26) durch diesen Zentrierring (60) hindurch erstreckt und wobei ein Spiel (j) zwischen der Welle und dem Ring vorgesehen ist.

14. Vorrichtung nach Anspruch 13, **dadurch gekennzeichnet, daß** die Antriebswelle (26) axial in Bezug auf den Zylinderblock (16) mit Hilfe eines Befestigungsringes (62) positioniert ist.

15. Vorrichtung nach Anspruch 4 und einem der Ansprüche 1 bis 14, **dadurch gekennzeichnet, daß** die Kupplungsmittel zwischen dem Ausgang des Motors und dem Eingang des Untersetzungsgetriebes eine Antriebswelle (26) umfassen, die sich durch die Trennwand (28) hindurch erstreckt, wobei Dichtungsmittel, die einen Dichtungsring (44') umfassen, zwischen der Wand und der Welle angeordnet sind, und daß die zweite Fluidzirkulationsleitung (48') zwischen dem Dichtungsring (44') und einem der Elemente (26, 28), mit denen der Ring zusammenwirkt, vorgesehen ist, wobei dieser Dichtungsring unter der Wirkung des Druckunterschiedes zwischen dem Gehäuse (14) des Motors und dem Gehäuse (30) des Untersetzungsgetriebes eine erste Position, in der er die zweite Leitung verschließt, und eine zweite Position, in der er eine Fluidzirkulation vom Gehäuse (14) des Motors zum Gehäuse (30) des Untersetzungsgetriebes gestattet, einnehmen kann.

16. Vorrichtung nach einem der Ansprüche 1 bis 15, **dadurch gekennzeichnet, daß** sie ein System (70) zur Kontrolle des Fluidfüllstandes in dem Gehäuse des Untersetzungsgetriebes umfaßt.

17. Vorrichtung nach Anspruch 16, **dadurch gekennzeichnet, daß** das Füllstandskontrollsystem (70) einen minimalen Füllstand definiert, der in der Betriebssituation der Vorrichtung höher als die obere Grenze des Innenraums des Gehäuses (14) des Motors ist.

18. Antriebsvorrichtung nach einem der Ansprüche 1 bis 17, umfassend einen Versorgungskreislauf, wobei dieser Kreislauf ein geschlossener Kreislauf ist, umfassend eine Hauptpumpe (100), die ein Gehäuse (106) besitzt, das zwei Hauptöffnungen (101, 102) zum Ansaugen oder Entleeren aufweist und das dazu bestimmt ist, einen Hauptkreislauf zu versorgen, umfassend Hauptversorgungs- und - entleerungsleitungen (108, 110) für den Hydraulikmotor (10), wobei der Kreislauf ferner eine Speisepumpe (112) umfaßt, die eine Hauptansaugöffnung (112A) aufweist, die mit einem Fluidbehälter verbunden ist,
**dadurch gekennzeichnet, daß** der Fluidbehälter von dem Gehäuse (14) des Hydraulikmotors gebildet ist.

19. Vorrichtung nach Anspruch 18, ferner umfassend einen Austauschventilblock (124, 126, 128), der Fluid aus dem Hauptkreislauf (108, 110) entnehmen kann, und Mittel (130, 132), um abgekühltes Fluid zu dem Behälter zurückzuleiten, der von dem Gehäuse (14) des Hydraulikmotors gebildet ist,
**dadurch gekennzeichnet, daß** der Austauschblock (124, 126, 128) in das Gehäuse (106) der Hauptpumpe (100) integriert und direkt an dieses Gehäuse angeschlossen ist, um in dieses letztgenannte das an der Hauptschaltung entnommene Fluid ohne äußere Leitung zu dem Gehäuse einzuspritzen.

20. Vorrichtung nach Anspruch 18 oder 19, **dadurch gekennzeichnet, daß** das Gehäuse (106) der Hauptpumpe (100) mit dem Gehäuse (14) des Motors (10) durch eine Fluidrückleitung (130) zu dem Behälter, der von dem Gehäuse (14) des Motors gebildet ist, verbunden ist, in der Kühlmittel (132) vorgesehen sind.

21. Vorrichtung nach Anspruch 19 oder 20, **dadurch gekennzeichnet, daß** das Austauschventil (124) einen ersten und einen zweiten Weg (125A, 125B)aufweist, die jeweils an die Hauptversorgungs- und -entleerungsleitungen (108, 110) angeschlossen sind, sowie einen dritten Weg (125C), der an das Gehäuse (106) der Hauptpumpe (100) angeschlossen ist, und daß ein Druckbegrenzer (126) zwischen dem dritten Weg und dem Gehäuse angeordnet ist.

## Claims

1. A drive device incorporating a hydraulic motor (10) and a planetary reduction gear (12), the motor comprising a housing (14) inside which is disposed a cylinder block with radial pistons (22), the device comprising means (25, 26) for coupling between the output of the motor and the input of the reduction gear, the latter comprising a housing (30) inside which is disposed a planetary reduction gear system (32, 34, 36) and having an output (38) provided with means (38A) for driving in rotation, the housing (14) of the motor and the housing (30) of the reduction gear forming distinct enclosures, **characterised in that** the device comprises means (46, 50; 48, 54; 48', 44'; 48", 45; 74, 76, 80; 88, 90, 94) for allowing a circulation of fluid between said housings and for controlling this circulation of fluid by limiting the circulation of fluid at least in one direction of circulation between the housing of the motor and the housing of the reduction gear.

2. The device according to claim 1, **characterised in that** it comprises at least one conduit for circulation of fluid (46; 48; 48', 48"; 74, 76; 88, 90) between the motor housing and the reduction gear housing (30) and **in that** said conduit is equipped with said means (50; 54; 44'; 45; 80; 94) for limiting the circulation of fluid at least in one direction of circulation between the housing of the motor and the housing of the reduction gear.

3. The device according to claim 2, **characterised in that** the housing (14) of the motor and the housing (30) of the reduction gear are separated by a separation wall (28) and **in that** the fluid circulation conduit (46; 48; 48', 48"; 74, 76; 88, 90) is formed in this separation wall.

4. The device according to any one of claims 1 to 3, **characterised in that** it comprises a first and a second conduit for circulation of fluid (46, 48; 46, 48', 48"; 88, 90, 74, 76) between the housing (14) of the motor and the housing (30) of the reduction gear, the first conduit (46; 88, 90) cooperating with a first non-return system (50; 94) which allows the circulation of the fluid only in the direction going from the reduction gear housing towards the motor housing, while the second conduit (48; 48', 48"; 74, 76) cooperates with a second non-return system (54, 44'; 45; 80) which allows the circulation of the fluid only in the direction going from the motor housing (14) towards the reduction gear housing (30), when the difference in pressure between said housings is at least equal to a given value.

5. The device according to claims 3 and 4, **characterised in that** the first and second fluid circulation conduits (46; 48; 48', 48"; 88, 90, 74, 76) are formed in the separation wall (28).

6. The device according to claim 5, **characterised in that**, when the device is in operation, the first fluid circulation conduit (46; 88, 90) is disposed in a lower part of the separation wall (28).

7. The device according to claim 5 or 6, **characterised in that**, when the device is in operation, the second fluid circulation conduit (48; 48', 48"; 74, 76) is disposed in an upper part of the separation wall (28).

8. The device according to any one of claims 4 to 7, **characterised in that** the first fluid circulation conduit (46) comprises a filter (52).

9. The device according to any one of claims 2 to 8, **characterised in that** it comprises a filling port (72) common to the motor housing (14) and to the reduction gear housing (30), which communicates with a filling conduit (74, 76) common to said housings, and **in that** said filling conduit forms a conduit for circulation of fluid between said housings.

10. The device according to claim 9, **characterised in that** the filling port (72) is obturated by a stopper (78) which cooperates with the means (80) for controlling the circulation of fluid between the motor housing and the reduction gear housing.

11. The device according to any one of claims 2 to 10, **characterised in that** it comprises a draining port (86) common to the motor housing (14) and to the reduction gear housing (30), which communicates with a draining conduit (88, 90) common to said housings, and **in that** said draining conduit forms a conduit for circulation of fluid between said housings.

12. The device according to claim 11, **characterised in that** the draining port (86) is obturated by a stopper (92) which cooperates with the means (94) for controlling the circulation of fluid between the reduction gear housing and the motor housing.

13. The device according to claim 3 and any one of claims 1 to 12, **characterised in that** the means for coupling between the output of the motor (10) and the input of the reduction gear (12) comprise a drive shaft (26) which extends through the separation wall (28), a tight connection being established between said wall and said shaft, and **in that** the motor comprises a single rotating support bearing (58) constituted by a taper roller bearing which cooperates, on the one hand, with the separation wall (28) and, on the other hand, with a centring ring (60) which is fast with the cylinder block (16) of the motor (10), the drive shaft (26) extending through this centring ring (60) and a clearance (j) being arranged between said shaft and said ring.

14. The device according to claim 13, **characterised in that** the drive shaft (26) is positioned axially with respect to the cylinder block (16) by means of a retaining ring (62).

15. The device according to claim 4 and any one of claims 1 to 14, **characterised in that** the means for coupling between the output of the motor and the input of the reduction gear comprise a drive shaft (26) which extends through the separation wall (28), sealing means comprising a seal (44') being disposed between said wall and said shaft, and **in that** the second fluid circulation conduit (48') is arranged between the seal (44') and one of the elements (26, 28) with which said seal cooperates, this seal being capable, under the effect of the pressure difference between the motor housing (14) and the reduction gear housing (30), of occupying a first position in which it obturates said second conduit and a second position in which it allows a circulation of fluid from the motor housing (14) towards the reduction gear housing (30).

16. The device according to any one of claims 1 to 15, **characterised in that** it comprises a system (70) for controlling the level of fluid in the reduction gear housing.

17. The device according to claim 16, **characterised in that** the level control system (70) defines a minimum level which, when the device is in operation, is higher than the upper limit of the interior space of the motor housing (14).

18. The drive device according to any one of claims 1 to 17 comprising a feeding circuit, this circuit being a closed circuit comprising a main pump (100) which comprises a housing (106), presenting two main suction or delivery ports (101, 102) and which is intended to feed a main circuit comprising main feed and exhaust conduits (108, 110) of the hydraulic motor (10), the circuit further comprising a booster pump (112) having a main suction port (112A) connected to a fluid reservoir,
**characterised in that** the fluid reservoir is constituted by the housing (14) of the hydraulic motor.

19. The device according to claim 18, further comprising an exchange unit (124, 126, 128) adapted to draw fluid from the main circuit (108, 110) and means (130, 132) for returning cooled fluid to the reservoir constituted by the housing (14) of the hydraulic motor,
**characterised in that** the exchange unit (124, 126, 128) is integrated in the housing (106) of the main pump (100) and is directly connected to said housing, to inject thereinto the fluid drawn from the main circuit, without a conduit outside said housing.

20. The device according to claim 18 or 19, **characterised in that** the housing (106) of the main pump (100) is connected to the housing (14) of the motor (10) by a pipe for return of fluid (130) towards the reservoir constituted by said motor housing (14), on which cooling means (132) are disposed.

21. The device according to claim 19 or 20, **characterised in that** the exchange valve (124) presents a first and a second way (125A, 125B), respectively connected to the main feed and exhaust conduits (108, 110), as well as a third way (125C) connected to the housing (106) of the main pump (100), and **in that** a pressure limiter (126) is disposed between said third way and said housing.
